# EUROPÄISCHE PATENTSCHRIFT

(11) **EP 3 098 461 B1**
(45) Veröffentlichungstag und Bekanntmachung des Hinweises auf die Patenterteilung: **22.11.2017**
(21) Anmeldenummer: 16001102.9
(22) Anmeldetag: 13.05.2016
(51) Int. Cl.: F16B 21/00

(54) **RASTBOLZEN**
LOCKING PIN
BOULON D'ARRET

(30) Priorität: 23.05.2015 DE 202015003789 U
(43) Veröffentlichungstag der Anmeldung: 30.11.2016
(73) Patentinhaber: Otto Ganter GmbH & Co. KG Normteilefabrik, 78120 Furtwangen (DE)
(72) Erfinder: Kienzler, Rudolf, 78120 Furtwangen (DE)
(74) Vertreter: Riebling, Peter

(56) Entgegenhaltungen:
- EP-B1- 2 163 772
- US-A1- 2013 336 719

## Beschreibung

Die Erfindung betrifft einen Rastbolzen mit einem Stellzapfen, welcher in seinem einen Endbereich einen Sperrzapfen aufweist, mit welchem der Stellzapfen in einer Führungsbohrung einer Führungshülse aus einer aus der Führungshülse axial vorstehenden Sperrstellung entgegen der Stellkraft einer Axialdruckfeder in eine zurückgezogene, nicht axial aus der Führungshülse vorstehende Neutralstellung verstellbar ist, wobei ein Zugknopf mit einer inneren Montagehülse vorgesehen ist, mit welcher der Zugknopf im zweiten Endbereich des Stellzapfens auf einem Aufnahmeabschnitt des Stellzapfens feststehend angeordnet ist, wobei der Zugknopf in radialem Abstand zu seiner inneren Montagehülse eine äußere Führungshülse bildet, mit welcher der Zugknopf auf einem Hülsenabschnitt der Führungshülse verschiebbar gelagert ist und wobei der Zugknopf einen Entriegelungsknopf aufweist, welcher begrenzt axial verstellbar im Zugknopf aufgenommen ist und aus einer aus dem Zugknopf axial vorstehenden Position entgegen der Federkraft einer Stellfeder in den Zugknopf hinein verstellbar ist, wobei die aus dem Zugknopf vorstehende Position durch zwischen dem Entriegelungsknopf und dem Hülsenabschnitt der Führungshülse wirkende Rastmittel fixierbar ist.

Aus der DE 103 38 621 A1 ist ein Rastbolzen bekannt, welcher eine gehäuseartige Führungshülse aufweist, mit welcher der Rastbolzen feststehend mit einem Maschinenteil oder dergleichen verbindbar ist. Hierzu kann diese Führungshülse in ihrem einen Endbereich mit einem Außengewinde versehen sein, mit welchem die Führungshülse in ein Innengewinde dieses Maschinenteils einschraubbar ist. Anstatt eines solchen Außengewindes kann in diesem Endbereich der Führungshülse auch eine radial vorstehende Montageplatte vorgesehen sein, welche mit dem maschineteil verschraubbar oder verschweißbar ist. Um dieses Maschinenteil feststehend mit einem zweiten, relativ zu diesem ersten Maschinenteil bewegbaren Maschinenteil zu verbinden, weist der Rastbolzen einen in der Führungshülse angeordnete Stellzapfen auf, welcher in seinem einen Endbereich mit einem Sperrzapfen versehen ist. Dieser Sperrzapfen liegt dabei im Bereich des Außengewindes der Führungshülse. Wird nun beispielsweise eine Bohrung des zweiten Maschinenteils mit diesem Stellzapfen bzw. Sperrzapfen in Überdeckung gebracht, so kann der Stellzapfen mit seinem Sperrzapfen axial aus der Führungshülse heraus bewegt werden, so dass dieser mit der genannten Bohrung in Eingriff gelangt. In dieser Sperrstellung ragt somit der Sperrzapfen des Stellzapfens in die Bohrung hinein, so dass die beiden Maschinenteile gegeneinander fixiert sind. Um diesen Stellzapfen aus dieser Sperrstellung entgegen der Stellkraft einer zwischen der Führungshülse und dem Stellzapfen wirkenden Axialdruckfeder zurückziehen zu können, weist der Stellzapfen in seinem, dem Sperrzapfen gegenüber liegenden Endbereich, einen Zugknopf auf, welcher feststehend mit einem Aufnahmeabschnitt des Stellzapfens in Verbindung steht. Dieser Aufnahmeabschnitt ist dementsprechend axial dem Sperrzapfen gegenüberliegend am Stellzapfen angeordnet.

Um diese zurückgezogene Neutralstellung des Stellzapfens in der Führungshülse zu fixieren, weist der Rastbolzen nach der DE 103 38 621 A1 eine spezielle Rastsperre auf. Hierzu ist die Führungshülse anschließend an ihr Außengewinde mit einem äußeren Mehrkantprofil versehen. Dieses Mehrkantprofil wird von einer äußeren Führungshülse des Zugknopfes umschlossen, welche ein inneres Mehrkantprofil aufweist, mit welchem die Führungshülse und somit der Zugknopf in seiner Sperrstellung unverdrehbar mit dem äußeren Mehrkantprofil der Führungshülse in Eingriff steht. Wird nun der Zugknopf aus seiner Sperrstellung in seine zurückgezogene Neutralstellung gebracht, so gelangen die beiden Mehrkantprofile außer Eingriff. In dieser zurückgezogenen Position kann der Zugknopf um einen vorbestimmten Winkel um die Längsmittelachse des Rastbolzens gedreht werden, so dass die beiden Mehrkantprofile nicht mehr deckungsgleich sind. Das innere Mehrkantprofil stützt sich somit bereichsweise stirnseitig am äußeren Mehrkantprofil der Führungshülse ab. Der Stellweg ist dabei derart bemessen, dass in der Neutralstellung der Sperrzapfen des Stellzapfens nicht mehr axial aus der Führungshülse vorsteht.

Nachteilig an dieser Konstruktion ist, dass die Fixierung der Neutralstellung durch eine relative Drehbewegung des Zugknopfes gegenüber der Führungshülse zu bewerkstelligen ist. Wird der Zugknopf nicht um den vorbestimmten Drehwinkel relativ zur Führungshülse verstellt, sondern beispielsweise weitergedreht, so gelangt das innere Mehrkantprofil der äußeren Führungshülse des Zugknopfes wiederum mit dem radial äußeren Mehrkantprofil der Führungshülse in Überdeckung, so dass der Zugknopf und somit der gesamte Stellzapfen mit seinem Sperrzapfen nach Freigabe des Zugknopfes wieder in seine Sperrstellung gelangt, was jedoch von der Bedienungsperson nicht gewünscht ist.

Um nun eine automatische, zwangsläufige Arretierung des Stellzapfens in seiner Neutralstellung bewirken zu können, ist aus der DE 10 2007 004 357 A1 ein Rastbolzen mit einer sogenannten Sperrfunktion bekannt. Auch diese Konstruktion geht vom oben beschriebenen Stand der Technik aus. Bei dieser Konstruktion soll ein Rastbolzen mit Sperrfunktion derart weitergebildet werden, dass auf möglichst kleinem Einbauraum eine formschlüssige Sperrfunktion dem Rastbolzen zugeordnet, werden kann, ohne dass die Sperrfunktion schmutzanfällig ist und ohne dass zum Ent- oder Verriegeln eine genau definierte Drehung des Rastbolzens benötigt wird.

Beim Gegenstand der DE 10 2007 004 357 A1 ist eine als Gehäuse bezeichnete Führungshülse vorgesehen, welche eine abgesetzte Durchgangsbohrung aufweist. In dieser Durchgangsbohrung ist ein als Raststift bezeichneter Sperrzapfen axial verstellbar geführt. Dieser Sperrzapfen ist Teil eines Stellzapfens, welcher wiederum einen Betätigungsbolzen bildet. Der gesamte Stellzapfen ist dabei in eine aus der Führungshülse vorstehende Sperrposition und entgegen einer Axialdruckfeder in eine zurückgezogene, nicht aus der Führungshülse vorstehende Neutralstellung bringbar. Hierzu ist am Stellzapfen ein entsprechender Zugknopf vorgesehen. Zur Verriegelung, insbesondere der zurückgezogenen Neutralstellung, sind beim Gegenstand der DE 10 2007 004 357 A1 Sperrelemente vorgesehen, welche aus einer radial zurückgezogenen Position in eine radial vorstehende Position gebracht werden können, in welcher diese Sperrelemente in innere Sperrausnehmungen der Führungshülse rastend eingreifen. Um diese Sperrelemente aus dieser Rastposition in die radial zurückgezogene Position bringen zu können, ist ein Druckknopf vorgesehen, durch dessen Betätigung die Sperrelemente über einen Betätigungsbolzen rückstellbar sind. Das Sperrelement kann dabei aus einem quer verlaufenden Arretierstift gebildet sein, welcher etwa mittig in seinem Querschnitt verjüngt ausgebildet ist. Wird der Betätigungsbolzen in diesem mittleren Bereich gegen das Sperrelement gedrückt, so wird dieses Sperrelement "durchgebogen", wodurch sich seine radiale Länge verkürzt. Die Rückstellung dieses Sperrelementes erfolgt durch dessen federelastische Ausbildung, so dass sich dieses Sperrelement wieder in seine gerade Form zurückverformt, sobald der Druckknopf und damit der Betätigungsbolzen entlastet wird. Da das Sperrelement bei dieser Konstruktion nur mit einem äußerst geringen Querschnitt ausgebildet werden kann, können hier keine großen Rastkräfte bzw. Haltekräfte aufgebracht werden. Wird somit der Stellzapfen über seinen Ziehknopf in axialer Richtung mit einer größeren Stellkraft belastet, so neigen diese Sperrelemente zum Abscheren, so dass deren Funktion, insbesondere bei längerer Betriebszeit, nicht sicher gewährleistet werden kann.

Aus der EP 2 163 772 B1 ist eine weitere Konstruktion eines Rastbolzens mit Rastsperre und Entriegelungsknopf bekannt geworden, bei welchem die Rastmechanik unmittelbar am Entriegelungsknopf und zwar im Zwischenraum zwischen dem axial unteren Rand des Entriegelungsknopfes und dem Ziehknopf angeordnet ist. Hierbei sind am Entriegelungsknopf ein oder mehrere sich in axialer Richtung erstreckende und in radialer Richtung einseitig federnd ausgebildete Federschenkel vorgesehen. An deren freien äußeren und federnd ausgebildeten Enden, sind jeweils Wulstlippen angeordnet, die gegeneinander gerichtete Keilflächen bilden. Diese Keilflächen dienen der Verrastung im Bereich zwischen dem Ziehknopf und der Führungshülse. Bei dieser Konstruktion befindet sich der Entriegelungsknopf in der Sperrstellung des Stellzapfens in einer aus dem Zugknopf vorstehenden Position. In dieser Position ist der Zugknopf durch die Verrastung gegen Zurückziehen gesperrt. Dies bedeutet, dass der Zugknopf erst nach Freigabe zurückgezogen werden kann. Hierzu ist es erforderlich, den Entriegelungsknopf in den Zugknopf hinein zu verstellen, so dass die Rastverbindung gelöst wird. Auf die detaillierte Ausgestaltung dieser Rastvorrichtung wird voll umfänglich auf die EP 2 163 772 B1 verwiesen.

Ist der Zugknopf entriegelt, so kann dieser in seine zurückgezogene neutrale Stellung gebracht werden, in welcher der Sperrzapfen des Stellzapfens nicht mehr axial aus der Führungshülse vorsteht. Diese zurückgezogene Position kann hier ebenfalls durch diese Rastmechanik gesichert werden. Dabei verbleibt der Entriegelungsknopf jedoch in einer annähernd bündig mit dem Zugknopf oberseitig abschließenden Sperrstellung. Es ist somit für die Bedienperson nicht zwingend erkennbar, dass die zurückgezogene neutrale Position des Zugknopfes und damit des Stellzapfens rastend gesichert ist. Um diese Rastverbindung zwischen dem Zugknopf und der Führungshülse wiederum aufzuheben, ist es hier zwingend notwendig, den zentralen Entriegelungsknopf zu betätigen, so dass sich der Zugknopf und damit der Stellzapfen wieder in seine Sperrstellung bewegen kann. Diese Sperrstellung wird im Übrigen durch eine Axialdruckfeder, welche zwischen der Führungshülse und dem Stellzapfen angeordnet ist, federbelastet gehalten.

In der Praxis hat sich nun gezeigt, dass die äußerst filigran ausgebildeten Sperrelemente des Entriegelungsknopfes und des Zugknopfes bei unsachgemäßer Belastung, insbesondere des Zugknopfes, brechen können, so dass nach längerer Betriebszeit diese Rastelemente nicht mehr funktionsfähig sind.

Demgemäß liegt der Erfindung die Aufgabe zugrunde, ausgehend von der EP 2 163 772 B1, einen Rastbolzen der gattungsgemäßen Art derart weiterzubilden, dass die Sperrung der zurückgezogenen Neutralstellung des Zugknopfes und damit des Stellzapfens für die Bedienperson in einfacher Weise erkennbar und ebenfalls in einfacher Weise entriegelbar ist.

Die Aufgabe wird erfindungsgemäß zusammen mit den Merkmalen des Oberbegriffes des Anspruches 1 dadurch gelöst, dass der Entriegelungsknopf Rastzungen aufweist, welche die obere, äußere Stirnwand des Zugknopfes nach innen bis in den axialen Bereich zwischen der inneren Montagehülse und der äußeren Führungshülse durchragen,
dass die Rastzungen jeweils eine radial außen liegende, in ihrem in den Zugknopf hinein ragenden Endbereich zur Führungshülse gerichtete Rastnut aufweisen,
dass die Rastnut in ihrem zur oberen, äußeren Begrenzungswand hin liegenden Endbereich einen Endabschnitt größerer radialer Tiefe bildet und in ihrem zum "unteren" Endbereich der Rastzunge hin liegenden Endbereich einen Endabschnitt geringerer radialer Tiefe bildet,
dass in die Rastnut eine Rastkugel eingesetzt ist, welche in der Sperrstellung des Zugknopfes und im in den Zugknopf eingeschobenen Zustand des Entriegelungsknopfes axial unverstellbar im Bereich des oberen Endabschnittes angeordnet ist und einerseits an einem Anschlag des Zugknopfes axial unverstellbar anliegt und andererseits am in die Führungshülse eingeschobenen Hülsenabschnitt radial unverstellbar anliegt und den Entriegelungsknopf axial sperrt,
dass der Zugknopf zusammen mit dem Entriegelungsknopf aus der Sperrstellung soweit in die Neutralstellung verstellbar ist,
dass die Rastkugel in einen Bereich "oberhalb" der oberen Endkante der Führungshülse gelangt und in dieser Position radial nach außen bis zu Anlage an die äußere Führungshülse verstellbar ist,
oder dass die Rastkugel in eine im Bereich der oberen Endkante der Führungshülse angeordnete, innere radiale Vertiefung der Führungshülse gelangt und radial nach außen verstellbar ist,
dass die Rastkugel nach ihrer Radialverstellung in den Endbereich der Rastnut geringerer Tiefe gleitet und sich der Entriegelungsknopf gleichzeitig in seine aus dem Zugknopf ausgezogene Endstellung bewegt, welche durch den Eingriff der Rastkugel mit dem Endbereich und dem Anschlag des Zugknopfes definiert ist,
dass die Rastkugel in ihrer radial nach außen verstellen Sperrstellung stirnseitig an der oberen Endkante des Hülsenabschnittes anliegt und eine Rückstellung des Zugknopfes in seine Sperrstellung blockiert.

Weitere vorteilhafte Ausgestaltungen sind den Unteransprüche sowie der nachfolgenden Beschreibung zu den Zeichnungen entnehmbar.

Gemäß Anspruch 2 kann vorgesehen sein, dass radial außenseitig an der inneren Montagehülse zur axial verstellbaren Aufnahme der Rastzungen Führungskanäle vorgesehen sind, welche in axialer Richtung im Bereich der äußeren Führungshülse angeordnet sind und dass die Führungskanäle jeweils eine radial außen liegende Begrenzungswand aufweisen, welche in radialem Abstand zur Führungshülse angeordnet ist und zusammen mit der Führungshülse einen Zwischenraum zur Aufnahme des Führungsabschnittes der Führungshülse bilden. Durch diese Ausgestaltung werden einerseits die Rastzungen definiert im Zugknopf geführt. Andererseits wird der Zugknopf präzise auf dem Führungsabschnitt der Führungshülse geführt, so dass dieser insbesondere beim Verstellen aus der zurückgezogenen Neutralstellung in seine Sperrstellung nicht verkanten kann.

So kann gemäß Anspruch 3 vorgesehen sein, dass sich die Führungskanäle mit ihrer Begrenzungswand über die gesamte Länge der Führungshülse des Zugknopfes erstrecken und jeweils einen Führungsschlitz aufweisen, durch welchen hindurch die jeweils zugehörige, in der Rastnut der jeweiligen Rastzunge angeordnete Rastkugel radial verstellbar ist und dass der Führungsschlitz den Anschlag des Zugknopfes für die Rastkugel bildet.

Durch diese Ausgestaltung nach Anspruch 3 wird eine präzise Führung der Rastkugeln innerhalb des Zugknopfes im jeweiligen Führungsschlitz der Begrenzungswand insbesondere in Umfangsrichtung erreicht. Des Weiteren wird auch die Führung des Zugknopfes auf dem Führungsabschnitt der Führungshülse verbessert. Da der Zwischenraum zwischen der äußeren Begrenzungswand und der äußeren Führungshülse des Zugknopfes eine größere axiale Länge aufweist, wird eine größere Führungslänge des sich in diesen Zwischenraum erstreckenden Führungsabschnittes der Führungshülse im Zugknopf erreicht.

Gemäß Anspruch 4 kann vorgesehen sein, dass die jeweilige Rastzunge im jeweils zugehörigen Führungskanal mit geringem Spiel aufgenommen ist und radial nach innen an der inneren Montagehülse axial verstellbar anliegt. Durch diese Ausgestaltung werden die Rastzungen radial nach innen durch die innere Montagehülse abgestützt, so dass diese im Betrieb nicht radial nach innen ausweichen können und somit durch die Rastkugeln in Zusammenwirken mit der jeweiligen Rastnut eine präzise Relativstellung des Entriegelungsknopfes zum Zugknopf sowohl in der zurückgezogenen Neutralstellung als auch in der "aktiven" Sperrstellung des Stellzapfens in der Führungshülse erreicht wird.

Zur einfachen Montage der Rastkugeln in der zugehörigen Rastnut kann gemäß Anspruch vorgesehen sein, dass die äußere Führungshülse in ihrem der oberen Stirnwand gegenüber liegenden Endbereich an ihrer Innenseite und im Umfangsbereich der Führungsschlitze jeweils eine nach unten offene Vertiefung aufweist, über welche jeweils eine Rastkugel bei vollständig in den Zugknopf eingeschobenem Entriegelungsknopf über den jeweils zugeordneten Führungsschlitz in eine der zugehordneten Rastnuten der jeweiligen Rastzunge einsetzbar ist.

Durch die Ausgestaltung gemäß Anspruch 6 wird die Herstellung des Rastbolzens erheblich vereinfacht, da kein zusätzlicher Anschlag zwischen dem Stellzapfen und der Führungshülse vorgesehen werden muss, um die zurückgezogene Neutralstellung des Stellzapfens in der Führungshülse zu definieren. Demgemäß ist nach Anspruch 6 vorgesehen, dass die Axialdruckfeder in der zurückgezogenen Stellung des Stellzapfens auf Block gespannt ist und die axiale Neutralstellung des nicht aus der Führungshülse vorstehenden Stellzapfens definiert.

Anhand der Zeichnung wird nachfolgend die Erfindung beispielhaft näher erläutert. Es zeigt:
- Fig. 1: eine perspektivische Explosionsdarstellung der Bauteile eines erfindungsgemäßen Rastbolzens;
- Fig. 2: eine Draufsicht auf den in Fig. 1 dargestellten Zugknopf;
- Fig. 3: eine perspektivische Unteransicht des Zugknopfes im teilweisen Schnitt;
- Fig. 4: einen perspektivischen Vertikalschnitt des Zugknopfes in seinem, auf einem Aufnahmeabschnitt des Stellzapfens festsitzend montierten Zustand;
- Fig. 5: einen teilweisen Schnitt einer Rastzunge des Entriegelungsknopfes aus Fig. 1 in seiner Betriebsstellung bei axial vorstehende Sperrstellung des Stellzapfen;
- Fig. 6: einen perspektivischen, teilweisen Vertikalschnitt des komplett monierten Rastbolzens in seiner "aktiven" Sperrstellung seines Stellzapfens;
- Fig. 7: die Darstellung aus Fig. 5 mit der Restzunge und den zugehöreigen Rastelementen in der zurückgezogenen Neutralstellung des Stellzapfens;
- Fig. 8: die Darstellung aus Fig. 6 mit dem sich in seiner zurückgezogenen Neutralstellung befindenden Stellzapfen.

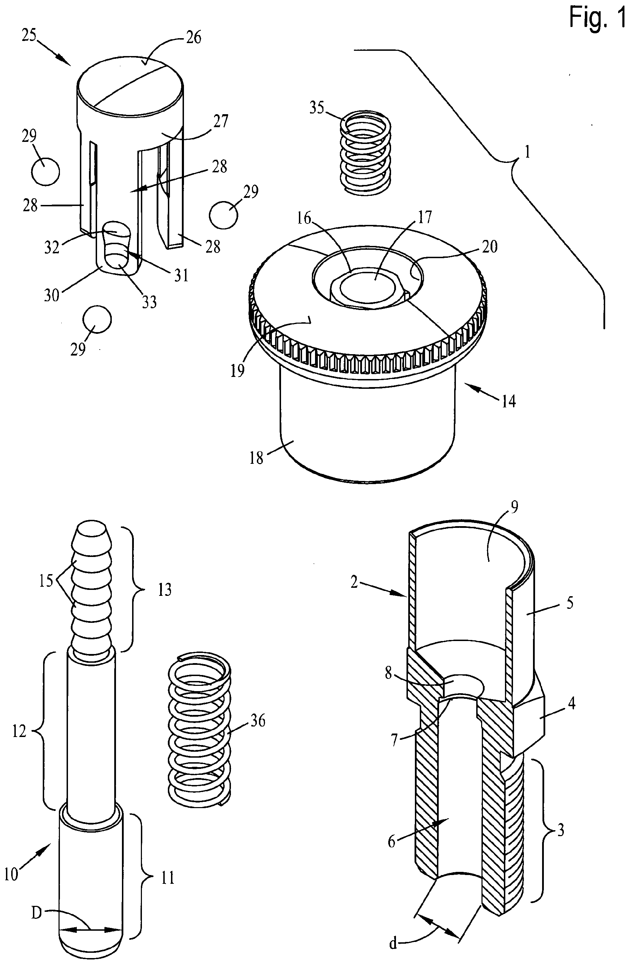

Fig. 1 zeigt eine perspektivische Explosionsdarstellung der einzelnen Bauelemente eines erfindungsgemäßen Rastbolzens 1. Dieser Rastbolzen 1 besteht aus einer Führungshülse 2, welche in Fig. 1 im vertikalen Schnitt dargestellt ist. Die Führungshülse 2 weist in ihrem "unteren" Endbereich ein Außengewinde 3 auf, mit welchem die Führungshülse 2 in ein Maschinenbauteil oder dergleichen einschraubbar ist. Anstatt eines Außengewindes kann in diesem Endbereich der Führungshülse 2 auch ein anderes, aus dem Stand der Technik bekanntes Befestigungsmittel, wie eine Anschraubplatte, eine Anschweißplatte oder dgl. vorgesehen sein. Auf dieses Außengewinde 3 kann eine Kontermutter aufgeschraubt sein, welche in Fig. 1 nicht dargestellt ist.

"Oberhalb" des Außengewindes 3 schließt sich etwa im mittleren Bereich der Führungshülse 2 an das Außengewinde 3 ein Außensechskant 4 an, über welchen die Führungshülse 2 feststehend in das Maschinenbauteil eingeschraubt werden kann. Nach oben hin schließt sich an diesen Außensechskant 4 ein Hülsenabschnitt 5 an, welcher einen Hohlzylinder bildet. Etwa im axialen Bereich des Außensechskantes 4 sowie des Außengewindes 3 weist die Führungshülse 2 eine abgestufte Führungsbohrung 6 auf, welche etwa im Bereich des Außensechskantes 4 einen radial nach innen abgesetzten Anschlag 7 bildet. An diesen Anschlag 7 schließt sich zum Führungsabschnitt 5 hin ein radial verjüngter Bohrungsabschnitt 8 an, welcher in den radial erweiterten Innenraum 9 des Führungsabschnittes 5 mündet.

In diese Führungsbohrung 6 ist ein Stellzapfen 10 einsetzbar, welcher in seinem einen unteren Endbereich einen radial erweiterten Sperrzapfen 11 bildet, wie dies aus Fig. 1 erkennbar ist. Dieser Sperrzapfen 11 weist einen Außendurchmesser **D** auf, welcher dem Innendurchmesser **d** des unteren Bereiches der Führungsbohrung 6, insbesondere im axialen Bereich des Außengewindes 3 entspricht. An diesen Sperrzapfen 11 schließt sich nach oben hin ein Führungsabschnitt 12 an, welcher passend den radial verjüngten Bohrungsabschnitt 8 der Führungsbohrung 6 im montierten Zustand verstellbar durchragt. In seinem, dem Sperrzapfen 11 gegenüber liegenden Endbereich, bildet der Stellzapfen 10 einen Aufnahmeabschnitt 13, auf welchen ein Zugknopf 14 feststehend aufsetzbar ist. Wie aus Fig. 1 ersichtlich ist, weist dieser Aufnahmeabschnitt 13 eine gezahnte Außenkontur 15 auf, mit welcher dieser Aufnahmeabschnitt 13 mit dem Zugknopf 14 zumindest axial feststehend in Eingriff bringbar ist.

Hierzu weist der Zugknopf 14 eine innere Montagehülse 16 auf, welche zur Aufnahme des Aufnahmeabschnittes 13 eine entsprechend im Durchmesser angepasste Durchgangsbohrung 17 bildet, von welcher in Fig. 1 nur der obere, radial erweiterte Endbereich erkennbar ist. Diese Durchgangsbohrung 17 ist im Durchmesser des sich an diesen Endbereich anschließenden Abschnitt (in Fig. 1 nicht sichtbar) derart ausgebildet, dass der Aufnahmeabschnitt 13 des Stellzapfens 10 nach dem Einpressen in die Montagehülse 16 sowohl eine Kraftschluss- als auch eine Formschlussverbindung bildet, so dass nach dem Aufpressen des Zugknopfes 14 auf den Stellzapfen 10 eine axial feststehende Verbindung entsteht.

Wie aus Fig. 1 weiter erkennbar ist, bildet der Zugknopf in radialem Abstand zur inneren Montagehülse 16 eine äußere Führungshülse 18.

Des Weiteren ist aus Fig. 1 erkennbar, dass die leicht vertikal nach oben gewölbte obere Stirnwand 19 in radialem Abstand zur Montagehülse 16, einen hohlzylindrischen Aufnahmebereich 20 bildet, in welchen ein Entriegelungsknopf 25 passend einsetzbar ist. Wie später noch erläutert wird, steht die innere Montagehülse 16 mit der radial außen liegenden Führungshülse 18 über diverse Verbindungsstege feststehend in Verbindung.

Der Entriegelungsknopf 25 weist eine ebenfalls leicht vertikal nach oben gewölbte obere Begrenzungswand 26 auf, in welche sich nach unten hin ein zylindrisch ausgebildeter Führungsabschnitt 27 anschließt. An diesem Führungsabschnitt 27 sind beim vorliegenden Ausführungsbeispiel insgesamt drei Rastzungen 28 angeformt, welchen jeweils eine Rastkugel 29 zugeordnet ist. Der Entriegelungsknopf 25 ist mit seinen Rastzungen 28 in entsprechende Führungselemente innerhalb der Führungshülse 18 des Zugknopfes 14 begrenzt axial verstellbar einsetzbar, wie dies später noch näher erläutert wird.

Die Rastzungen 28 weisen an ihrem Außenumfang auf einer begrenzten axialen Länge in ihrem jeweiligen unteren Endbereich 30 eine Rastnut 31 auf, wie dies in Fig. 1 für die "vordere" Rastzunge 28 erkennbar ist. Diese Rastnut 31 weist einen oberen Endabschnitt 32 auf, welcher mit einer größeren Tiefe ausgestattet ist als ein sich nach unten hin daran anschließender unterer Endabschnitt 33.

In die Durchgangsbohrung 17 der Montagehülse 16 ist eine als Axialdruckfeder ausgebildete Stellfeder 35 einsetzbar, deren Funktionsweise später noch näher erläutert wird.

Eine weitere Axialdruckfeder 36 ist auf den Führungsabschnitt 12 des Stellzapfens 10 aufsetzbar und befindet sich zusammen mit dem unteren Sperrzapfen 11 innerhalb des radial erweiterten Bereiches der Führungsbohrung 6. Mittels dieser Axialdruckfeder 36 wird der Stellzapfen 10 in seiner Sperrposition gehalten, in welcher der Sperrzapfen 11 axial nach unten aus der Führungshülse 2 vorsteht.

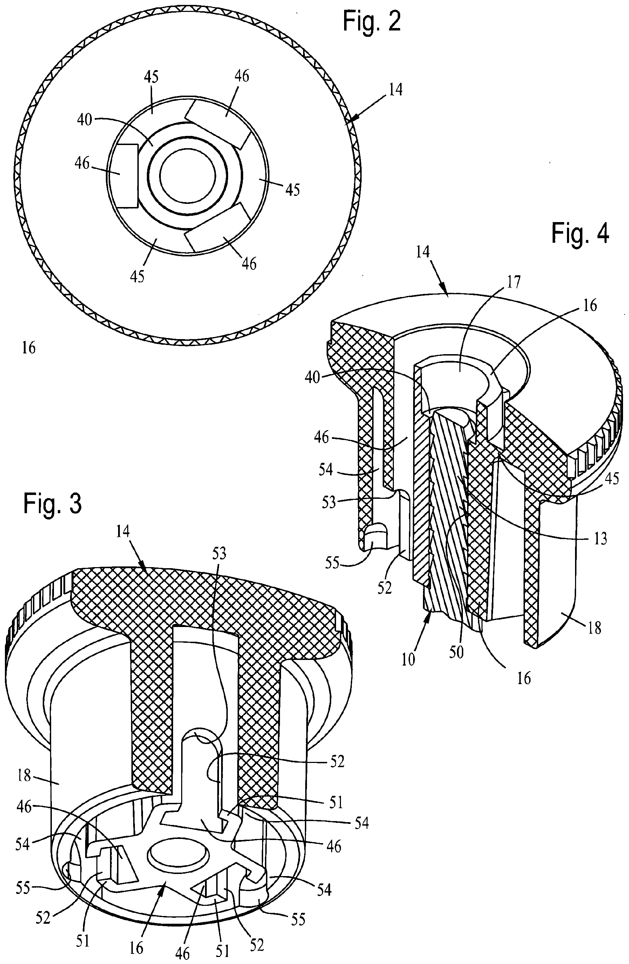

Fig. 2 zeigt eine Draufsicht auf den Zugknopf 14. In Fig. 2 ist die Montagehülse 16 erkennbar, welche beim vorliegenden Ausführungsbeispiel die oben erwähnte Durchgangsbohrung 17 aufweist. Diese Durchgangsbohrung 17 ist abgesetzt ausgebildet und weist einen radial innen nach vorstehenden axialen, umlaufenden Anschlagsteg 40 auf, welcher versenkt im Zugknopf 14 angeordnet ist und an welchem sich im montierten Zustand die Stellfeder 35 axial abstützt.

Des Weiteren sind aus Fig. 2 insgesamt drei Verbindungsstege 45 erkennbar, über welche die innere Montagehülse mit der äußeren Führungshülse in Verbindung steht. Diese äußere Führungshülse ist in der Draufsicht der Fig. 2 nicht erkennbar. Hierzu wird auf die Schnittdarstellung der Fig. 4 verwiesen. Hier ist einerseits die radial innenliegende Montagehülse 16 sowie die diese Montagehülse 16 umlaufend umschließende Führungshülse 18 des Zugknopfes 14 erkennbar. Des Weiteren ist aus Fig. 4 einer der Verbindungsstege 45 erkennbar.

Aus der Draufsicht der Fig. 2 sind insgesamt drei Führungskanäle 46 ersichtlich, welche zur Aufnahme der drei Rastzungen 28 des Entriegelungsknopfes 25 dienen. Dabei zeigt die Schnittdarstellung der Fig. 4 einen solchen Führungskanal 46. Weiter ist aus Fig. 4 die abgesetzte Ausgestaltung der Durchgangsbohrung 17 mit ihrem radial nach innen vorstehenden, umlaufenden Anschlagsteg 40 erkennbar. Auf diesen Anschlagsteg 40 stützt sich, wie bereits oben erwähnt, die Stellfeder 35 aus Fig. 1 im Betrieb axial ab.

Des Weiteren ist aus Fig. 4 ersichtlich, dass der Aufnahmeabschnitt 13 des Stellzapfens 10 in den radial verjüngt ausgebildeten Bohrungsabschnitt 50 der Durchgangsbohrung 17 der inneren Montagehülse 16 eingepresst und axial feststehend fixiert ist.

Fig. 3 zeigt eine perspektivische Unteransicht des Zugknopfes 14, in welcher die äußere Führungshülse 18 des Zugknopfes 14 teilweise geschnitten dargestellt ist. In radialem Abstand zu dieser äußeren Führungshülse 18 ist die innere Montagehülse 16 erkennbar. Diese weist zur äußeren Führungshülse 18 einen radialen Abstand auf. Des Weiteren sind aus Fig. 3 die drei Führungskanäle 46 erkennbar, welche gleichmäßig am Umfang verteilt an der inneren Montagehülse 16 angeordnet sind. Die radial äußere Begrenzungswand 51 des jeweiligen Führungskanales 46 weist einen nach unten offenen Führungsschlitz 52 auf. Dieser Führungsschlitz 52 bildet etwa in der axialen Mitte des Zugknopfes 14 einen Anschlag 53. Im montierten Zustand ragt die jeweils zugeordnete Rastzunge 28 des Entriegelungsknopfes 25 aus Fig. 1 mit ihrer Rastnut 31 bis in den axialen Bereich des jeweils zugeordneten Führungsschlitzes 52. Im montierten Zustand ist die jeweils zugehörige Rastkugel 29 in die Rastnut 31 eingesetzt und befindet sich dementsprechend im Bereich des jeweils zugeordneten Führungsschlitzes 52.

Des Weiteren ist aus Fig. 3 erkennbar, dass die radial äußere Begrenzungswand 51 und die äußere Führungshülse 18 einen radialen Abstand voneinander aufweisen, so dass im montierten Zustand der obere Hülsenabschnitt 5 der Führungshülse 2 zwischen die Begrenzungswand 51 und die äußere Führungshülse 18 des Zugknopfes 14 einschiebbar ist. Somit wird zwischen der äußeren Begrenzungswand 51 und der radial äußeren Führungshülse im Bereich dieser Begrenzungswand 51 jeweils ein Zwischenraum 54 gebildet, wie dies insbesondere auch aus der Schnittdarstellung der Fig. 4 erkennbar ist. Weiter ist aus Fig. 4 ebenfalls die Begrenzungswand 51 sowie deren Führungsschlitz 52 mit dessen oberem Anschlag 53 erkennbar.

Weiter ist sowohl aus Fig. 3 als auch aus Fig. 4 erkennbar, dass im unteren Endbereich der Führungshülse 18 und im Umfangsbereich des jeweiligen Führungsschlitzes 52 der jeweiligen Begrenzungswand 51 in der Führungshülse 18 eine radial erweiterte Vertiefung 55 vorgesehen ist, welche zum Einbringen der jeweils zugeordneten Rastkugel 29 in die Rastnut 31 der jeweils in den zugehörigen Führungskanal 46 eingeschobenen Rastzunge 28 dient.

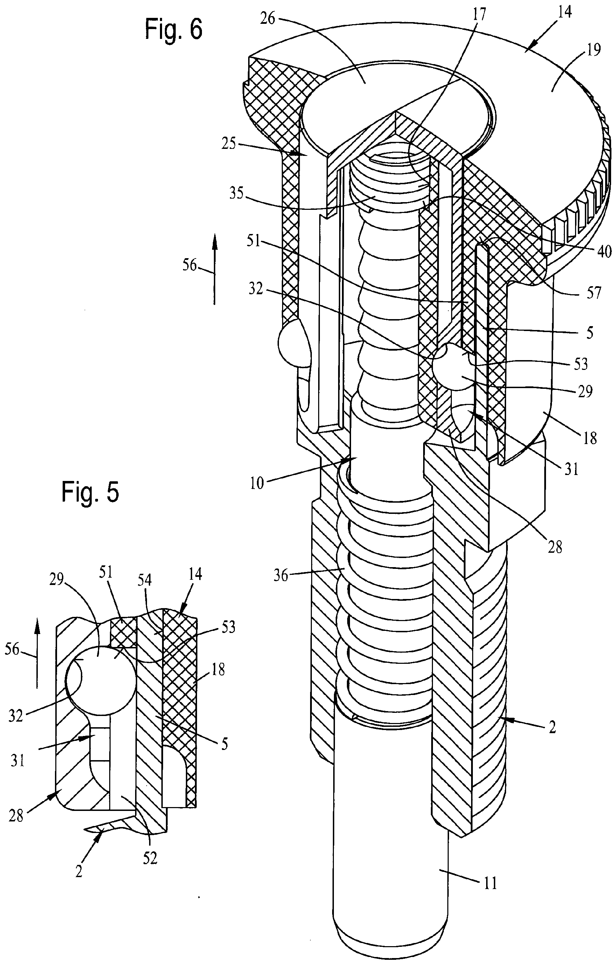

Zu den Fig. 5 und 6 wird nachfolgend der funktionelle Zusammenhang der Rastelement in der aus der Führungshülse 2 vorstehenden Sperrstellung des Sperrzapfens 11 des Stellzapfens 10 näher beschrieben. Fig. 5 zeigt hierzu eine Schnittdarstellung einer Rastzunge 28 mit einer aufgenommenen Rastkugel 29 im, im Führungskanal 46 eingesetzten Zustand. Dabei befindet sich der Zugknopf 14 in seiner Sperrstellung, in welcher der Sperrzapfen 11 die Führungshülse 2 durchragt und nach unten hin aus dieser Führungshülse 2 vorsteht, wie dies aus Fig. 6 erkennbar ist.

Es ist aus Fig. 5 erkennbar, dass die Rastkugel 29 einerseits im oberen "tieferen" Endabschnitt 32 der Rastnut 31 aufgenommen ist. Gleichzeitig stützt sich die Rastkugel 29 am Anschlagsteg 53 des Führungsschlitzes 52 der äußeren Begrenzungswand 51 des Führungskanals 46 axial ab. Dementsprechend kann die Rastzunge 28 des Entriegelungsknopfes 25 (Fig. 6) nicht in Richtung des Pfeiles 56 relativ zum Zugknopf 14 bewegt werden. Weiter ist aus Fig. 5 noch der obere Hülsenabschnitt 5 der Führungshülse 2 erkennbar.

Aus Fig. 6 ist erkennbar, dass in dieser Sperrstellung des Zugknopfes 14 und damit des Stellzapfens 10 der Entriegelungsknopf 25 mit seiner oberen Begrenzungswand 26 etwa bündig mit der oberen Stirnwand 19 des Zugknopfes 14 abschließt. Zwischen der oberen Begrenzungswand 26 und dem radial nach innen gerichteten Anschlagsteg 40 der Durchgangsbohrung 17 ist die Stellfeder 35 unter axialer Vorspannung angeordnet. Aufgrund der Sperrwirkung der Rastkugel 29 mit dem Anschlagsteg 53 ist diese axiale Position des Entriegelungsknopfes 25 innerhalb des Zugknopfes 14 fixiert. Wird nun der gesamte Zugknopf 14 zusammen mit dem Entriegelungsknopf 25 in Richtung des Pfeiles 56 ausgezogen, so gleitet die Rastkugel 29 innenseitig entlang der oberen Führungshülse 5, bis die Rastkugel 29 in den Bereich der oberen Endkante 57 des Hülsenabschnittes 5 gelangt.

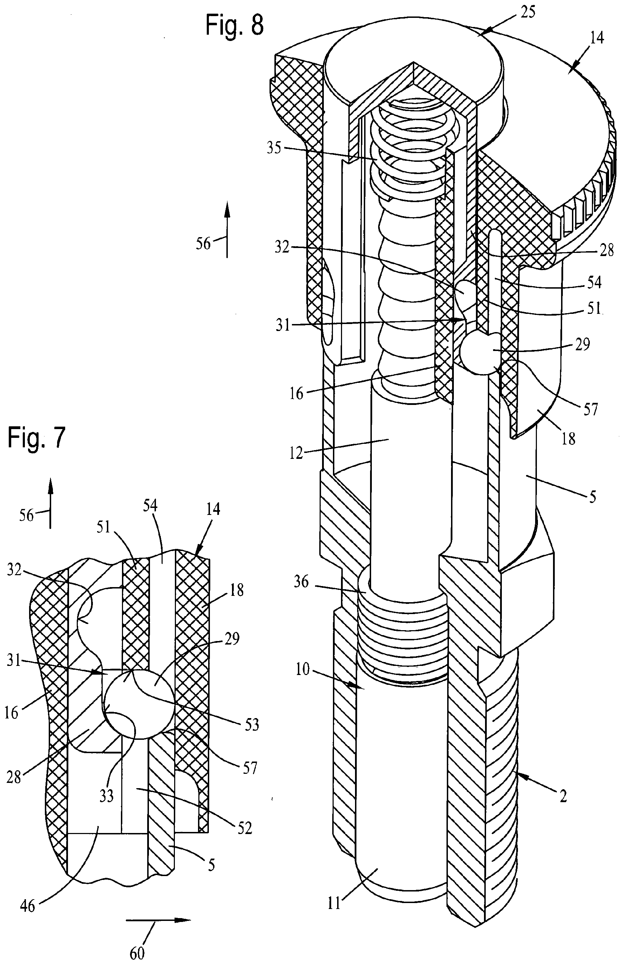

Nach weiterer Bewegung in Richtung des Pfeiles 56 wird somit die Rastkugel 29 freigegeben und kann in Richtung des Pfeils 60 (Fig. 7) radial nach außen in den Zwischenraum 54 gelangen bzw. innenseitig mit der äußeren Führungshülse 18 in Kontakt gelangen. Dabei wird die Rastkugel 29 aus dem oberen tieferen Endabschnitt 32 der Rastnut 31 herausgedrückt und gelangt in den unteren Endabschnitt 33 der Rastnut 31, wie dies in den Fig. 7 und 8 im Schnitt dargestellt ist.

Gleichzeitig kann sich somit der Entriegelungsknopf 25 ebenfalls in Richtung des Pfeiles 56 relativ zum Zugknopf 14 bewegen und überragt diesen in der in Fig. 8 dargestellten Position in axialer Richtung nach oben. Somit ist für das Bedienungspersonal nunmehr erkennbar, dass sich der gesamte Stellzapfen 10 mit seinem Sperrzapfen 11 in einer zurückgezogenen neutralen Stellung befindet, in welcher der Sperrzapfen 11 nicht aus der Führungshülse 2 vorsteht, wie dies in Fig. 8 dargestellt ist.

Die Begrenzung des vertikalen Stellweges des Stellzapfens 11 in Richtung des Pfeiles 56 kann dabei durch die in den Fig. 6 und 8 ebenfalls erkennbare Axialdruckfeder 36 bewirkt werden. Auch ist eine Begrenzung des Stellweges durch eine entsprechende Formgebung des Stellzapfens 10, beispielsweise im Bereich des mittleren Führungsabschnittes 12, zur Bildung eines Stellanschlages denkbar.

Durch die Erfindungsgemäße Ausgestaltung wird somit einerseits die nach oben aus dem Zugknopf 14 vorstehende relative Position des Entriegelungsknopfes 25 gegenüber dem Zugknopf 14 und andererseits gleichzeitig die zurückgezogene Neutralstellung des Zugknopfes 14 und damit des Stellzapfens 10 in der Führungshülse 2 durch die Rastkugel 29 definiert.

Es ist erkennbar, dass aufgrund der erfindungsgemäßen Ausgestaltung, insbesondere der Rastvorrichtung zwischen dem Entriegelungsknopf 25 und dem Zugknopf 14, für eine Bedienungsperson in einfacher Weise erkennbar ist, dass sich der Zugknopf 14 zusammen mit dem Stellzapfen 10 in einer zurückgezogenen Stellung befindet und auch in dieser axial fixiert ist.

Um nun den Zugknopf 14 zusammen mit dem Stellzapfen 10 wieder in die in Fig. 6 dargestellte Sperrposition bringen zu können, ist zunächst der Entriegelungsknopf 25 entgegen des Pfeiles 56 relativ zum Zugknopf 14 zu verstellen, bis dieser insbesondere mit der Rastnut 31 in die in Fig. 6 dargestellte Relativposition zum Zugknopf 14 gelangt. In dieser Position kann sich die Rastkugel 29 wiederum entgegen des Pfeils 60 radial nach innen bewegen, so dass der gesamte Zugknopf 14 und somit auch der Stellzapfen 10 entgegen des Pfeiles 56 wieder verstellt werden kann. Die in Fig. 6 dargestellte Sperrposition wird dabei durch die Axialdruckfeder 36 gesichert.

Die erfindungsgemäße Ausgestaltung der Rasteinrichtung weist des Weiteren eine äußerst hohe Stabilität, so dass ein Ausbrechen und dergleichen mehr nicht vorkommen kann. Des Weiteren ist die Bedienung äußerst einfach und insbesondere ist die verrastete Sicherung gemäß Fig. 8 für das Bedienungspersonal in einfacher Weise erkennbar.

Da ohnehin eine Stellbewegung entgegen des Pfeiles 56 zum Erreichen der Sperrposition erfolgt, entspricht die Druckbewegung auf den Entriegelungsknopf 25 dieser Stellbewegung, so dass das Bedienungspersonal durch einfachen Druck auf den Entriegelungsknopf 25 das Lösen der Rastverbindung zwischen dem Zugknopf 14 und der Führungshülse 5 bzw. deren Hülsenabschnitt 5 in einfacher, logischer Weise bewirken kann. Der Zugknopf 14 gelangt somit "automatisch" aufgrund der Federkraft der Axialdruckfeder 36 in seine in Fig. 6 dargestellte Sperrposition, sobald die "Verriegelung" durch die Rastkugel 29 aufgehoben ist.

Des Weiteren ist auch die Verriegelung in der zurückgezogenen Neutralstellung des Zugknopfes 14 in einfacher Weise gewährleistet, da der Entriegelungsknopf 25 mit Erreichen der Endstellung des Zugknopfes 14 durch die Radialbewegung der Rastkugel 29 selbständig "entriegelt" wird und sich automatisch aufgrund der Federkraft der Stellfeder 35 in die in Fig. 8 dargestellte Verriegelungsposition begibt. Diese Verriegelungsposition ist durch die Rastkugel 29 in Wirkverbindung mit dem "unteren" Endbereich 33 der Rastnut 31 zwangläufig ebenfalls definiert.

Wie aus Fig. 7 ersichtlich ist, stützt sich die Rastkugel 29 in der dargestellten Sperrposition an der oberen Endkante 57 des Hülsenabschnittes 5 axial ab. Anstatt einer solchen Abstützung könnte im axialen Bereich kurz "unterhalb" dieser Endkante 57 an der Innenwand des Hülsenabschnittes 5 auch eine Vertiefung oder eine umlaufend Nut vorgesehen sein, in welche die Rastkugel radial verstellbar eingreift (in der Zeichnung nicht dargestellt).

## Patentansprüche

1. Rastbolzen (1) mit einem Stellzapfen (10), welcher in seinem einen Endbereich einen Sperrzapfen (11) aufweist, mit welchem der Stellzapfen (10) in einer Führungsbohrung (6) einer Führungshülse (2) aus einer aus der Führungshülse (2) axial vorstehenden Sperrstellung entgegen der Stellkraft einer Axialdruckfeder (36) in eine zurückgezogene, nicht axial aus der Führungshülse (2) vorstehende Neutralstellung verstellbar ist, wobei ein Zugknopf (14) mit einer inneren Montagehülse (16) vorgesehen ist, mit welcher der Zugknopf (14) im zweiten Endbereich des Stellzapfens (10) auf einem Aufnahmeabschnitt (13) des Stellzapfens (10) feststehend angeordnet ist, wobei der Zugknopf (14) in radialem Abstand zu seiner inneren Montagehülse (16) eine äußere Führungshülse (18) bildet, mit welcher der Zugknopf (14) auf einem Hülsenabschnitt (5) der Führungshülse (2) verschiebbar gelagert ist und wobei der Zugknopf (14) einen Entriegelungsknopf (25) aufweist, welcher begrenzt axial verstellbar im Zugknopf (14) aufgenommen ist und aus einer aus dem Zugknopf (14) axial vorstehenden Position entgegen der Federkraft einer Stellfeder (35) in den Zugknopf (14) hinein verstellbar ist, wobei die aus dem Zugknopf (14) vorstehende Position durch zwischen dem Entriegelungsknopf (25) und dem Hülsenabschnitt (5) der Führungshülse (5) wirkende Rastmittel (28, 29, 31, 32, 33) fixierbar ist,
**dadurch gekennzeichnet,**
**dass** der Entriegelungsknopf (25) Rastzungen (28) aufweist, welche die obere, äußere Stirnwand (19) des Zugknopfes (14) nach innen bis in den axialen Bereich zwischen der inneren Montagehülse (16) und der äußeren Führungshülse (18) durchragen,
**dass** die Rastzungen (28) jeweils eine radial außen liegende, in ihrem in den Zugknopf (14) hinein ragenden Endbereich (30) zur Führungshülse (18) gerichtete Rastnut (31) aufweisen,
**dass** die Rastnut (31) in ihrem zur oberen, äußeren Begrenzungswand (26) hin liegenden Endbereich einen Endabschnitt (32) größerer radialer Tiefe bildet und in ihrem zum "unteren" Endbereich (30) der Rastzunge (28) hin liegenden Endbereich einen Endabschnitt (33) geringerer radialer Tiefe bildet,
**dass** in die Rastnut (31) eine Rastkugel (29) eingesetzt ist, welche in der Sperrstellung des Zugknopfes (14) und im in den Zugknopf (14) eingeschobenen Zustand des Entriegelungsknopfes (25) axial unverstellbar im Bereich des oberen Endabschnittes (32) angeordnet ist und einerseits an einem Anschlag (53) des Zugknopfes (14) axial unverstellbar anliegt und andererseits am in die Führungshülse (18) eingeschobenen Hülsenabschnitt (5) radial unverstellbar anliegt und den Entriegelungsknopf (25) axial sperrt,
**dass** der Zugknopf (14) zusammen mit dem Entriegelungsknopf (25) aus der Sperrstellung soweit in die Neutralstellung verstellbar ist, dass die Rastkugel (29) in einen Bereich "oberhalb" der oberen Endkante (57) der Führungshülse (18) gelangt und in dieser Position radial nach außen bis zu Anlage an die äußere Führungshülse (18) verstellbar ist,
oder dass die Rastkugel (29) in eine im Bereich der oberen Endkante (57) der Führungshülse (18) angeordnete, innere radiale Vertiefung der Führungshülse (18) gelangt und radial nach außen verstellbar ist,
**dass** die Rastkugel (29) nach ihrer Radialverstellung in den Endbereich (33) der Rastnut (31) geringerer Tiefe gleitet und sich der Entriegelungsknopf (25) gleichzeitig in seine aus dem Zugknopf (14) ausgezogene Endstellung bewegt, welche durch den Eingriff der Rastkugel (29) mit dem Endbereich (33) und dem Anschlag (54) des Zugknopfes (14) definiert ist,
**dass** die Rastkugel (29) in ihrer radial nach außen verstellten Sperrstellung stirnseitig an der oberen Endkante (57) des Hülsenabschnittes (5) anliegt und eine Rückstellung des Zugknopfes (14) in seine Sperrstellung blockiert.

2. Rastbolzen nach Anspruch 1, **dadurch gekennzeichnet, dass** radial außenseitig an der inneren Montagehülse (16) zur axial verstellbaren Aufnahme der Rastzungen (28) Führungskanäle (46) vorgesehen sind, welche in axialer Richtung im Bereich der äußeren Führungshülse (18) angeordnet sind und
dass die Führungskanäle (46) jeweils eine radial außen liegende Begrenzungswand (51) aufweisen, welche in radialem Abstand zur Führungshülse (18) angeordnet ist und zusammen mit der Führungshülse (18) einen Zwischenraum (54) zur Aufnahme des Führungsabschnittes (5) der Führungshülse (2) bilden.

3. Rastbolzen nach Anspruch 2, **dadurch gekennzeichnet, dass** sich die Führungskanäle (46) mit ihrer Begrenzungswand (51) über die gesamte Länge der Führungshülse (18) des Zugknopfes (14) erstrecken und jeweils einen Führungsschlitz (52) aufweisen, durch welchen hindurch die jeweils zugehörige, in der Rastnut (31) der jeweiligen Rastzunge (28) angeordnete Rastkugel (29) radial verstellbar ist und dass der Führungsschlitz (52) den Anschlag (53) des Zugknopfes (14) für die Rastkugel (29) bildet.

4. Rastbolzen nach Anspruch 2 oder 3, **dadurch gekennzeichnet, dass** die jeweilige Rastzunge (28) im jeweils zugehörigen Führungskanal (46) mit geringem Spiel aufgenommen ist und radial nach innen an der inneren Montagehülse (16) axial verstellbar anliegt.

5. Rastbolzen nach Anspruch 3 oder 4, **dadurch gekennzeichnet, dass** die äußere Führungshülse (18) in ihrem der oberen Stirnwand (19) gegenüber liegenden Endbereich an ihrer Innenseite und im Umfangsbereich der Führungsschlitze (52) jeweils eine nach unten offene Vertiefung (55) aufweist, über welche jeweils eine Rastkugel (29) bei vollständig in den Zugknopf (14) eingeschobenem Entriegelungsknopf (25) über den jeweils zugeordneten Führungsschlitz (52) in eine der zugehordneten Rastnuten (31) der jeweiligen Rastzunge (28) einsetzbar ist.

6. Rastbolzen nach einem der Ansprüche 1 bis 5, **dadurch gekennzeichnet, dass** die Axialdruckfeder (36) in der zurückgezogenen Stellung des Stellzapfens (1) auf Block gespannt ist und die axiale Neutralstellung des nicht aus der Führungshülse (2) vorstehenden Stellzapfens (10) definiert.

## Claims

1. Latching bolt (1) with a positioning pin (10) which in its end region has a locking pin (11) with which the positioning pin (10) can be moved in a guide bore (6) of a guide sleeve (2) from a locking position protruding axially out of the guide sleeve (2) against the positioning force of an axial compression spring (36) into a retracted neutral position not protruding axially out of the guide sleeve (2), wherein an extraction knob (14) is provided with an inner mounting sleeve (16) with which the extraction knob (14) is arranged fixedly on a receiving section (13) of the positioning pin (10) in the second end region of the positioning pin (10), wherein the extraction knob (14) at a radial distance from its inner mounting sleeve (16) forms an outer guide sleeve (18) with which the extraction knob (14) is mounted displaceably on a sleeve section (5) of the guide sleeve (2) and wherein the extraction knob (14) has an unlocking button (25) which is mounted so as to be axially moveable a limited amount in the extraction knob (14) and can be moved from a position protruding axially out of the extraction knob (14) against the spring force of a positioning spring (35) into the extraction knob (14), wherein the position protruding out of the extraction knob (14) can be fixed by latching means (28, 29, 31, 32, 33) acting between the unlocking button (25) and the sleeve section (5) of the guide sleeve (5), **characterised in that**
the unlocking button (25) has latching tongues (28) which extend through the upper outer end wall (19) of the extraction knob (14) inwards into the axial region between the inner mounting sleeve (16) and the outer guide sleeve (18),
**in that** the latching tongues (28) each have a latching groove (31) which lies radially on the outside and faces the guide sleeve (18) in its end region (30) protruding into the extraction knob (14),
**in that** the latching groove (31) forms an end section (32) of greater radial depth in its end region lying towards the upper outer boundary wall (26), and an end section (33) of lesser radial depth in its end region (30) lying towards the "lower" end region (30) of the latching tongue (28),
**in that** a latching ball (29) is inserted into the latching groove (31), which latching ball is arranged in the region of the upper end section (32) so that it cannot be moved axially when the unlocking button (25) is slid into the extraction knob (14), and on one side bears on a stop (53) of the extraction knob (14) so that it cannot be moved axially and on the other side bears on the sleeve section (5) slid into the guide sleeve (18) so that it cannot be moved radially and locks the unlocking button (25) axially, **in that** the extraction knob (14) together with the unlocking button (25) can be moved out of the locking position into the neutral position so that the latching ball (29) passes into a region "above" the upper end edge (57) of the guide sleeve (18) and in this position can be moved radially outwards until it bears on the outer guide sleeve (18),
or so that the latching ball (29) passes into an inner radial recess in the guide sleeve (18) arranged in the region of the upper end edge (57) of the guide sleeve (18) and can be moved radially outwards,
**in that** the latching ball (29) after its radial movement slides into the end region (33) of the latching groove (31) of lesser depth and the unlocking button (25) simultaneously moves into its end position in which it is extracted from the extraction knob (14) and which is defined by the engagement of the latching ball (29) with the end region (33) and the stop (54) of the extraction knob (14),
**in that** in its locking position in which it is moved radially outwards the latching ball (29) bears on the upper end edge (57) of the sleeve section (5) on the front side and prevents the extraction knob (14) moving back into its locking position.

2. Latching bolt according to claim 1, **characterised in that** guide channels (46) are provided radially on the outside on the inner mounting sleeve (16) for axially moveable reception of the latching tongues (28), which guide channels (46) are arranged in the axial direction in the region of the outer guide sleeve (18) and
**in that** the guide channels (46) each have a boundary wall (51) which lies radially on the outside and is arranged a radial distance from the guide sleeve (18) and together with the guide sleeve (18) form an intermediate chamber (54) for receiving the guide section (5) of the guide sleeve (2).

3. Latching bolt according to claim 2, **characterised in that** the guide channels (46) with their boundary wall (51) extend over the entire length of the guide sleeve (18) of the extraction knob (14) and each have a guide slot (52) through which the respective associated latching ball (29) arranged in the latching groove (31) of the respective latching tongue (28) can be moved radially and **in that** the guide slot (52) forms the stop (53) of the extraction knob (14) for the latching ball (29).

4. Latching bolt according to claim 2 or 3, **characterised in that** the respective latching tongue (28) is received in the respective associated guide channel (46) with little play and bears radially inwards on the inner mounting sleeve (16) so that it can be moved axially.

5. Latching bolt according to claim 3 or 4, **characterised in that** in its end region lying opposite the upper front wall (19) on its inside and in the circumferential region of the guide slots (52) the outer guide sleeve (18) has a recess (55) which is open towards the bottom by means of which a latching ball (29) can be inserted into one of the associated latching grooves (31) of the respective latching tongue (28) through the respective associated guide slot (52) when the unlocking button (25) is slid into the extraction knob (14) completely.

6. Latching bolt according to one of claims 1 to 5, **characterised in that** in the retracted position of the positioning pin (10) the axial compression spring (36) is compressed into a block and defines the axial neutral position of the positioning pin (10) when not protruding out of the guide sleeve (2).

## Revendications

1. Boulon d'arrêt (1) avec une cheville de positionnement (10) qui présente dans une zone d'extrémité une cheville de blocage (11) avec laquelle la cheville de positionnement (10) est apte à être déplacée dans un perçage de guidage (6) d'un manchon de guidage (2) pour passer, à l'encontre de la force de positionnement d'un ressort de compression axial (36), d'une position de blocage dépassant axialement dudit manchon de guidage (2), à une position neutre rétractée ne dépassant pas du manchon de guidage (2), un bouton de traction (14) étant prévu, avec un manchon de montage intérieur (16) avec lequel ledit bouton de traction (14) est disposé de manière fixe dans la seconde zone d'extrémité de la cheville de positionnement (10) sur une section de réception (13) de celle-ci, le bouton de traction (14) formant, à une distance radiale de son manchon de montage intérieur (16), un manchon de guidage extérieur (18) avec lequel ledit bouton (14) est monté coulissant sur une section (5) du manchon de guidage (2), et le bouton de traction (14) présentant un bouton de déverrouillage (25) qui est logé dans ledit bouton (14) avec une mobilité axiale limitée et qui est apte à être enfoncé dans le bouton (14), à l'encontre de la force d'un ressort de positionnement (35), à partir d'une position dépassant axialement dudit bouton (14), la position qui dépasse du bouton de traction (14) étant apte à être fixée par des moyens d'arrêt (28, 31, 32, 33) qui agissent entre la tête de déverrouillage (25) et la section (5) du manchon de guidage (2),
**caractérisé en ce que** le bouton de déverrouillage (25) présente des languettes d'arrêt (28) qui traversent la paroi frontale extérieure supérieure (19) du bouton de traction (14) vers l'intérieur jusque dans la zone axiale située entre le manchon de montage intérieur (16) et le manchon de guidage extérieur (18),
**en ce que** les languettes d'arrêt (28) présentent chacune une rainure d'arrêt (31) qui est située radialement à l'extérieur et qui est dirigée, dans sa zone d'extrémité (30) entrant dans le bouton de traction (14), vers le manchon de guidage (18),
**en ce que** la rainure d'arrêt (31) forme, dans sa zone d'extrémité dirigée vers la paroi de limitation extérieure supérieure (26), une section d'extrémité (32) à plus grande profondeur radiale, et forme dans sa zone d'extrémité dirigée vers la zone d'extrémité "inférieure" (30) de la languette d'arrêt (28) une section d'extrémité (33) de plus faible profondeur radiale,
**en ce qu'**il est prévu, introduite dans la rainure d'arrêt (31), une bille d'arrêt (29) qui, dans la position de blocage du bouton de traction (14) et dans l'état du bouton de déverrouillage (25) glissé dans ledit bouton (14), est disposée de manière fixe axialement dans la zone de la section d'extrémité supérieure (32), et qui est appliquée d'une part, fixe axialement, contre une butée (53) du bouton de traction (14) et est appliquée d'autre part, fixe radialement, contre la section de manchon (5) glissée dans le manchon de guidage (18) et bloque axialement le bouton de déverrouillage (25),
**en ce que** le bouton de traction (14), avec le bouton de déverrouillage (25), est apte à être amené de la position de blocage à la position neutre au point que la bille d'arrêt (29) arrive dans une zone située "au-dessus" du bord d'extrémité supérieur (57) du manchon de guidage (18) et, dans cette position, soit apte à être amenée radialement vers l'extérieur en butée contre le manchon de guidage extérieur (18), ou que la bille d'arrêt (29) arrive dans un creux radial intérieur du manchon de guidage (18) disposé dans la zone du bord d'extrémité supérieur (57) dudit manchon de guidage (18), et puisse être déplacée radialement vers l'extérieur,
**en ce que** la bille d'arrêt (29), après son déplacement radial, glisse dans la zone d'extrémité (33) de la rainure d'arrêt (31) de plus faible profondeur, et le bouton de déverrouillage (25) se déplace en même temps jusqu'à sa position de fin de course, sortie du bouton de traction (14), qui est définie par l'accouplement entre la bille d'arrêt (24) et la zone d'extrémité (33) et la butée (53) du bouton de traction (14),
**en ce que** la bille d'arrêt (29), dans sa position de blocage déplacée radialement vers l'extérieur, est appliquée côté frontal contre le bord d'extrémité supérieur (57) de la section de manchon (5) et empêche le bouton de traction (14) de revenir dans sa position de blocage.

2. Boulon d'arrêt selon la revendication 1, **caractérisé en ce qu'**il est prévu sur le côté radialement extérieur du manchon de montage intérieur (16), pour loger de manière mobile axialement les languettes d'arrêt (28), des conduits de guidage (46) qui sont disposés dans le sens axial dans la zone du manchon de guidage extérieur (18), et
**en ce que** les conduits de guidage (46) présentent chacun une paroi de limitation (51), située radialement vers l'extérieur, qui est disposée à une distance radiale du manchon de guidage (18) et qui forme avec celui-ci un espace intermédiaire (54) pour recevoir la section de guidage (5) du manchon de guidage (2).

3. Boulon d'arrêt selon la revendication 2, **caractérisé en ce que** les conduits de guidage (46) s'étendent avec leur paroi de limitation (51) sur toute la longueur du manchon de guidage (18) du bouton de traction (14), et présentent chacun une fente de guidage (52) à travers laquelle la bille d'arrêt (29) correspondante qui est disposée dans la rainure d'arrêt (31) de la languette d'arrêt (28) correspondante est mobile radialement, et **en ce que** la fente de guidage (52) forme la butée (53) du bouton de traction (14) pour la bille d'arrêt (29).

4. Boulon d'arrêt selon la revendication 2 ou 3, **caractérisé en ce que** chaque languette d'arrêt (28) est logée avec un faible jeu dans le conduit de guidage (46) correspondant, et est appliquée, mobile axialement, radialement vers l'intérieur contre le manchon de montage intérieur (16).

5. Boulon d'arrêt selon la revendication 3 ou 4, **caractérisé en ce que** le manchon de guidage extérieur (18), dans sa zone d'extrémité opposée à la paroi frontale supérieure (19), présente sur son côté intérieur et dans la zone circonférentielle de chaque fente de guidage (52) un creux (55) ouvert vers le bas par l'intermédiaire duquel une bille d'arrêt (29) correspondante, quand le bouton de déverrouillage (25) est complètement introduit dans le bouton de traction (14), est apte à être introduite par la fente de guidage (52) associée dans l'une des rainures d'arrêt (31) associées de la languette d'arrêt (28).

6. Boulon d'arrêt selon l'une des revendications 1 à 5, **caractérisé en ce que** le ressort de compression axial (36), dans la position rétractée de la cheville de positionnement (1), est contraint à fond et définit la position neutre axiale de la cheville de positionnement (10) ne dépassant pas du manchon de guidage (2).
